# EUROPÄISCHE PATENTSCHRIFT

(11) **EP 3 697 664 B1**
(45) Veröffentlichungstag und Bekanntmachung des Hinweises auf die Patenterteilung: **20.08.2025**
(21) Anmeldenummer: 17840532.0
(22) Anmeldetag: 20.12.2017
(51) Int. Cl.: B61D 17/02

(54) **SCHIENENFAHRZEUG MIT EINER DREHGESTELLVERKLEIDUNG**
RAIL VEHICLE COMPRISING A BOGIE CLADDING
VÉHICULE SUR RAILS COMPRENANT UN CARÉNAGE DE BOGIE

(43) Veröffentlichungstag der Anmeldung: 26.08.2020
(73) Patentinhaber: Siemens Mobility Austria GmbH, 1210 Wien (AT)
(72) Erfinder: CZERWINKA, Thomas, 8410 Weitendorf (AT); PRIX, Alexander, 8010 Graz (AT); GRZONA, Andreas, 47638 Straelen (DE); GAGEIK, Manuel Alexander, 47918 Tönisvorst (DE)
(74) Vertreter: Siemens Patent Attorneys
(86) Internationale Anmeldenummer: PCT/EP2017/083791
(87) Internationale Veröffentlichungsnummer: WO 2019/120510

(56) Entgegenhaltungen:
- EP-A1- 3 222 484
- EP-A2- 2 236 323
- WO-A1-2016/010204
- DE-A1- 102009 006 562
- DE-A1- 102010 061 718
- DE-A1- 2 542 780
- DE-C- 726 181

## Beschreibung

Die Erfindung betrifft ein Schienenfahrzeug, umfassend ein Drehgestell, eine Drehgestellkavität, in welche das Drehgestell eingebettet ist, eine Drehgestellverkleidung, mittels welcher das Drehgestell zumindest teilweise verkleidet ist, wobei die Drehgestellverkleidung eine Öffnung aufweist.

Es ist bekannt, bei einem Schienenfahrzeug, insbesondere bei einem im Hochgeschwindigkeitsverkehr eingesetzten Schienenfahrzeug, ein Drehgestell des Schienenfahrzeugs mittels einer Drehgestellverkleidung zu verkleiden, um den Luftwiderstand des Schienenfahrzeugs zu verringern. Die Drehgestellverkleidung schließt eine Drehgestellkavität des Schienenfahrzeugs, in welche das Drehgestell eingebettet ist, (teilweise) ab und verringert ein verlustbehaftetes Einströmen von Außenluft in die Drehgestellkavität während der Fahrt des Schienenfahrzeugs.

Weist die Drehgestellverkleidung eine Öffnung auf, kann während der Fahrt des Schienenfahrzeugs durch die Öffnung Außenluft in die Drehgestellkavität einströmen. Eine solche Öffnung kann zum Beispiel ein montagebedingter Spalt zwischen zwei benachbarten Verkleidungselementen der Drehgestellverkleidung oder ein eine Relativbewegung zwischen zwei Verkleidungselementen ermöglichender Bewegungsspalt sein.

Das Einströmen von Außenluft durch eine solche Öffnung in die Drehgestellkavität wirkt sich nicht nur nachteilig auf den Luftwiderstand des Schienenfahrzeugs aus, sondern kann auch dazu führen, dass durch die Außenluft Schotter-, Schmutz- und/oder Schneepartikel in die Drehgestellkavität eingetragen werden, die sich dort absetzen können. Dies führt zu einem erhöhten Wartungsaufwand und kann gegebenenfalls zu Schäden am Schienenfahrzeug, insbesondere am Drehgestell, führen.

Um das Einströmen von Außenluft durch eine Öffnung in die Drehgestellkavität zu verhindern oder zumindest zu verringern, sieht die DE 10 2016 201 154 A1 vor, mithilfe einer Lufteinblasvorrichtung druckbeaufschlagte Luft in die Drehgestellkavität einzublasen. Diese Lösung ist relativ kostenintensiv, weil sie konstruktiv aufwändig ist und - da während der Fahrt ein kontinuierliches Einblasen von Luft erforderlich ist - mit einem hohen Energieaufwand verbunden ist.

Weiterhin zeigt die DE 10 2009 006 562 A1 eine Fahrwerksverkleidung für ein Schienenfahrzeug. Zwischen einer Bodenplatte und einem Umfangsteil der Fahrwerksverkleidung sind Dichtungselemente vorgesehen, welche einen Spalt zwischen der Bodenplatte und dem Umfangsteil vollständig verschließen.

In der EP 3 222 484 A1 ist eine Fahrwerksverkleidung eines Schienenfahrzeugs dargestellt, wobei zwischen einem Verkleidungsteil und einem Wagenkasten bzw. Wagenkästen und/oder zwischen einzelnen Verkleidungsteilen elastische Verbindungsmittel angeordnet sind, welche band- oder blockförmig ausgeführt sind.

Weiterhin offenbart die DE 726 181 C ein Schienenfahrzeug mit einer Wagenkastenverkleidung und einer Fahrwerksverkleidung, zwischen welchen ein Abstand vorgesehen ist, welcher von verformbaren Verbindungsmitteln in allen Betriebszuständen des Schienenfahrzeugs überbrückt wird.

Darüber hinaus beschreibt die DE 10 2010 061 718 A1 ein Schienenfahrzeug mit einem verkleideten Fahrwerk, wobei zwischen einem Verkleidungsteil und einem Wagenkasten des Schienenfahrzeugs eine Stoffbespannung in einer Weise angeordnet ist, so dass im Bereich des Fahrwerks eine geschlossene Mantelfläche des Schienenfahrzeugs gebildet ist.

Die WO 2016/010204 A1 zeigt ferner eine Seitenverkleidung eines Wagens für einen Hochgeschwindigkeitszug, wobei zwischen einzelnen Bereichen der Seitenverkleidung Verbindungsmittel angeordnet sind.

Eine Aufgabe der Erfindung ist es, bei einem Schienenfahrzeug der eingangs genannten Art in aufwandsgünstiger Weise eine Verringerung des Einströmens von Luft durch die Öffnung in die Drehgestellkavität zu ermöglichen.

Diese Aufgabe wird erfindungsgemäß gelöst durch ein Schienenfahrzeug nach Anspruch 1.

Das erfindungsgemäße Schienenfahrzeug umfasst ein Drehgestell, eine Drehgestellkavität, in welche das Drehgestell eingebettet ist, eine Drehgestellverkleidung, mittels welcher das Drehgestell zumindest teilweise verkleidet ist, wobei die Drehgestellverkleidung eine Öffnung aufweist. Zudem weist die Drehgestellverkleidung ein an der Öffnung angeordnetes Strömungshemmungsmittel zur Verringerung eines Einströmens von Luft durch die Öffnung in die Drehgestellkavität auf.

Vorteilhafte Weiterbildungen des erfindungsgemäßen Schienenfahrzeugs sind Gegenstand der abhängigen Patentansprüche sowie der nachfolgenden Beschreibung.

Das Strömungshemmungsmittel hemmt das Einströmen von Luft durch besagte Öffnung in die Drehgestellkavität, insbesondere indem das Strömungshemmungsmittel einen Strömungswiderstand für die Luft erhöht. Je nach konkreter Ausgestaltung und/oder Anordnung des Strömungshemmungsmittels kann das Strömungshemmungsmittel das Einströmen von Luft durch besagte Öffnung in die Drehgestellkavität eventuell sogar vollständig verhindern. Mit anderen Worten, das Strömungshemmungsmittel kann eine dichtende Wirkung aufweisen.

Mithilfe des Strömungshemmungsmittels kann somit eine Verringerung des Luftwiderstands des Schienenfahrzeugs erzielt werden. Zudem benötigt das Strömungshemmungsmittel - anders als die Lufteinblasvorrichtung aus der DE 10 2016 201 154 A1 - keine externe Energiezufuhr, um seine Funktion zu erfüllen. Folglich lässt sich mithilfe des Strömungshemmungsmittels eines Verringerung des Energiebedarfs des Schienenfahrzeugs im Fahrbetrieb erreichen.

Das Strömungshemmungsmittel kann außerdem die Geschwindigkeitsverteilung einer Außenluftströmung im Unterflurbereich des Schienenfahrzeugs positiv beeinflussen, insbesondere derart, dass eine Auslösung von Schotterflug verringert oder vermieden wird. Zudem kann mithilfe des Strömungshemmungsmittels der Eintrag von Schotter-, Schmutz- und/oder Schneepartikeln in die Drehgestellkavität verringert oder vermieden werden, sodass der Wartungsaufwand des Schienenfahrzeugs verringert werden kann.

Vorliegend ist unter einer Drehgestellkavität ein Hohlraum für das Drehgestell zu verstehen, in welchem das Drehgestell zumindest teilweise aufgenommen ist.

Unter einer Drehgestellverkleidung ist vorliegend eine Verkleidung (im Sinne einer Umhüllung) für das Drehgestell zu verstehen. Ein Verkleidungselement der Drehgestellverkleidung muss nicht notwendigerweise am Drehgestell selbst bzw. an dessen Drehgestellrahmen befestigt sein. Zum Beispiel kann ein Verkleidungselement der Drehgestellverkleidung am Wagenkasten des Schienenfahrzeugs befestigt sein, insbesondere im Unterflurbereich des Schienenfahrzeugs. Ein Verkleidungselement der Drehgestellverkleidung hat vorzugsweise den Zweck, die Drehgestellkavität zumindest teilweise abzuschließen. Eine Öffnung der Drehgestellverkleidung im Sinne der vorliegenden Erfindung kann insbesondere ein Spalt sein.

Unter einer Verringerung des Einströmens von Luft durch die Öffnung der Drehgestellverkleidung in die Drehgestellkavität ist vorliegend eine Verringerung des durch die Öffnung in die Drehgestellkavität einströmenden Luftmassenstrom (also der Luftmasse, die pro Zeiteinheit durch die Öffnung in die Drehgestellkavität einströmt) zu verstehen.

Vorteilhafterweise ist das Strömungshemmungsmittel elastisch verformbar. Dadurch lässt sich erreichen, dass das Strömungshemmungsmittel nach einer Verformung seine Ursprungsform wieder annimmt. Ein Vorteil, der sich ergibt, wenn das Strömungshemmungsmittel elastischen verformbar ausgebildet ist, ist, dass sich das Strömungshemmungsmittel beispielsweise bei der Montage der Drehgestellverkleidung und/oder benachbarter Bauteile verformen lässt, ohne dass das Strömungshemmungsmittel beschädigt wird. Eine elastische Verformbarkeit des Strömungshemmungsmittels ermöglicht außerdem, dass sich das Strömungshemmungsmittel adaptiv an die konstruktiven bzw. geometrischen Gegebenheiten im Bereich der Öffnung anpassen kann, wodurch zum Beispiel zumindest Teil der Öffnung effektiv verschlossen werden kann und so eine effektive Hemmung des Einströmens von Luft durch die Öffnung erzielt werden kann. Befindet sich besagte Öffnung zwischen zwei Verkleidungselementen, die relativ zueinander beweglich sein sollen, kann durch eine elastische Verformbarkeit des Strömungshemmungsmittels die Beweglichkeit dieser Elemente sichergestellt werden und zugleich das Einströmen von Luft durch die Öffnung effektiv verringert werden.

Das Strömungshemmungsmittel bzw. die Dichtlippe kann insbesondere einen Elastomer enthalten oder aus einem Elastomer bestehen. Auf diese Weise kann eine hohe Elastizität des Strömungshemmungsmittels erzielt werden.

Erfindungsgemäß ist das Strömungshemmungsmittel als Bürste ausgebildet. Eine Bürste ist ebenfalls kostengünstig herstellbar und ermöglicht eine gute Hemmung des Einströmens von Luft durch besagte Öffnung.

Im Falle der Ausgestaltung des Strömungshemmungsmittels als Bürste weist das Strömungshemmungsmittel zweckmäßigerweise einen elastisch verformbaren Bürstenbesatz, insbesondere einen Bürstenbesatz aus Metall, Keramik, Kunststoff und/oder Haar, auf.

Das Strömungshemmungsmittel ist vorzugsweise an einem Verkleidungselement der Drehgestellverkleidung befestigt, zum Beispiel mittels einer Schraub-, Niet- und/oder Klebverbindung.

Die Drehgestellverkleidung kann ein erstes Verkleidungselement und ein benachbart zu dem ersten Verkleidungselement angeordnetes zweites Verkleidungselement aufweisen. Besagte Öffnung kann beispielsweise ein Spalt zwischen dem ersten und dem zweiten Verkleidungselement sein. Mit anderen Worten, mithilfe des Strömungshemmungsmittels kann insbesondere das Einströmen von Luft durch den Spalt zwischen benachbarten Verkleidungselementen der Drehgestellverkleidung reduziert oder verhindert werden.

Das erste und das zweite Verkleidungselement können zum Beispiel am Drehgestell, insbesondere an dessen Drehgestellrahmen, befestigt sein. Anders ausgedrückt, das erste und das zweite Verkleidungselement können drehgestellseitige Verkleidungselemente sein. In diesem Fall können sich das erste und das zweite Verkleidungselement vorzugsweise zusammen mit dem Drehgestell relativ zu dem Wagenkasten des Schienenfahrzeugs bewegen, insbesondere ohne ihre Relativposition zu dem Drehgestellrahmen zu ändern. Bei besagter Öffnung kann es sich in diesem Fall zum Beispiel um einen Montagespalt zwischen den beiden Verkleidungselementen handeln.

Alternativ können das erste und das zweite Verkleidungselement am Wagenkasten des Schienenfahrzeugs befestigt sein. Mit anderen Worten, das erste und das zweite Verkleidungselement können wagenkastenseitige Verkleidungselemente sein. In diesem Fall sind das erste und das zweite Verkleidungselement vorzugsweise gegenüber dem Wagenkasten unbeweglich. Bei besagter Öffnung kann es sich in diesem Fall beispielsweise um einen Montagespalt zwischen den beiden Verkleidungselementen handeln.

Weiter ist es möglich, dass das erste Verkleidungselement am Drehgestell befestigt ist und das zweite Verkleidungselement am Wagenkasten befestigt ist. Das heißt, das erste Verkleidungselement kann ein drehgestellseitiges Verkleidungselement sein und das zweite Verkleidungselement kann ein wagenkastenseitiges Verkleidungselement sein. In diesem Fall kann sich das erste Verkleidungselement vorzugsweise zusammen mit dem Drehgestell relativ zu dem Wagenkasten bewegen, insbesondere ohne seine Relativposition zu dem Drehgestellrahmen zu ändern, während das zweite Verkleidungselement vorzugsweise gegenüber dem Wagenkasten unbeweglich ist. Bei besagter Öffnung kann es sich in diesem Fall insbesondere um einen Bewegungsspalt zwischen den beiden Verkleidungselementen handeln. Umgekehrt ist es möglich, dass das erste Verkleidungselement am Wagenkasten befestigt ist und das zweite Verkleidungselement am Drehgestell befestigt ist.

Ferner kann das Schienenfahrzeug ein weiteres an der Öffnung angeordnetes Strömungshemmungsmittel zur Verringerung eines Einströmens von Luft durch die Öffnung in die Drehgestellkavität aufweisen. Dadurch kann das Einströmen von Luft durch die Öffnung in die Drehgestellkavität weiter verringert werden. Vorzugsweise sind das erstgenannte und das weitere Strömungshemmungsmittel über- oder nebeneinander angeordnet.

Das erstgenannte Strömungshemmungsmittel kann beispielweise am ersten Verkleidungselement befestigt sein. Das weitere Strömungshemmungsmittel kann zum Beispiel am zweiten Verkleidungselement befestigt sein. Vorzugsweise ist das weitere Strömungshemmungsmittel als Dichtlippe oder als Bürste ausgebildet.

Bei einer vorteilhaften Erfindungsvariante sind die beiden Strömungshemmungsmittel voneinander beabstandet. Bei einer anderen vorteilhaften Erfindungsvariante sind die beiden Strömungshemmungsmittel miteinander in Kontakt und/oder greifen die beiden Strömungshemmungsmittel ineinander.

Des Weiteren kann vorgesehen sein, dass das erstgenannte Strömungshemmungsmittel mit dem zweiten Verkleidungselement in Kontakt ist und/oder das weitere Strömungshemmungsmittel mit dem ersten Verkleidungselement in Kontakt ist. Alternativ ist es möglich, dass das erstgenannte Strömungshemmungsmittel von dem zweiten Verkleidungselement beabstandet ist und/oder das weitere Strömungshemmungsmittel von dem ersten Verkleidungselement beabstandet ist.

Außer dem zuvor erwähnten ersten Verkleidungselement und dem zuvor erwähnten zweiten Verkleidungselement kann die Drehgestellverkleidung ein oder mehrere weitere Verkleidungselemente aufweisen. Zwischen einem solchen weiteren Verkleidungselement und dem ersten oder zweiten Verkleidungselement kann die Drehgestellverkleidung eine Öffnung (zum Beispiel in Form eines Spalts) und gegebenenfalls ein an dieser Öffnung angeordnetes Strömungshemmungsmittel der oben beschrieben Art aufweisen. Weiterhin kann die Drehgestellverkleidung zwischen zwei solchen weiteren Verkleidungselementen eine Öffnung (zum Beispiel in Form eines Spalts) und gegebenenfalls ein an dieser Öffnung angeordnetes Strömungshemmungsmittel der oben beschrieben Art aufweisen.

Bei einer weiteren vorteilhaften Ausführungsvariante ist besagte Öffnung eine Öffnung eines Verkleidungselements der Drehgestellverkleidung, durch welche ein Element des Drehgestells hindurchgeführt ist. Das Element des Drehgestells, das durch die Öffnung hindurchgeführt ist, kann unter anderem ein Radsatzlager, eine Leitung, insbesondere eine Fluidleitung oder eine elektrische Leitung, oder eine Halterung, wie zum Beispiel eine Halterung für einen Sandstreuer, für eine Spurkranz-Schmiereinrichtung oder für einen Schienenräumer, sein. Ferner kann das Strömungshemmungsmittel mit besagtem Element des Drehgestells in Kontakt sein oder von besagtem Element beabstandet sein.

Des Weiteren kann die Drehgestellverkleidung mindestens eine weitere Öffnung aufweisen. Vorteilhafterweise umfasst die Drehgestellverkleidung für die jeweilige weitere Öffnung mindestens ein eigenes Strömungshemmungsmittel, das an der weiteren Öffnung angeordnet ist, um ein Einströmen von Luft durch die weitere Öffnung in die Drehgestellkavität zu verringern.

Zweckmäßigerweise ist das Schienenfahrzeug mit einer Mehrzahl von Drehgestellen ausgestattet, die jeweils in eine Drehgestellkavität des Schienenfahrzeugs eingebettet sind. Das Schienenfahrzeug kann für mehrere, insbesondere alle, der Drehgestelle jeweils eine Drehgestellverkleidung der oben beschriebenen Art aufweisen.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Schienenfahrzeug kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Werden in verschiedenen Figuren die gleichen Bezugszeichen verwendet, so bezeichnen diese gleiche oder einander entsprechende Elemente.

Es zeigen:
- FIG 1: einen Teil eines Schienenfahrzeugs, das ein Drehgestell sowie eine Drehgestellverkleidung aufweist, in einer Seitenansicht;
- FIG 2: das Drehgestell sowie die Drehgestellverkleidung des Schienenfahrzeugs aus FIG 1 in einer Ansicht von oben;
- FIG 3-6: zwei benachbarte Verkleidungselemente der Drehgestellverkleidung, eine Öffnung zwischen den beiden Verkleidungselementen sowie ein bzw. zwei an der Öffnung angeordnete/-s Strömungshemmungsmittel in verschiedenen Ausführungsvarianten;
- FIG 7: ein Drehgestell sowie eine Drehgestellverkleidung eines weiteren Schienenfahrzeugs in einer Ansicht von oben;
- FIG 8: einen Teil der Drehgestellverkleidung aus FIG 7, ein durch eine Öffnung der Drehgestellverkleidung geführtes Radsatzlager sowie ein an der Öffnung angeordnetes Strömungshemmungsmittel.

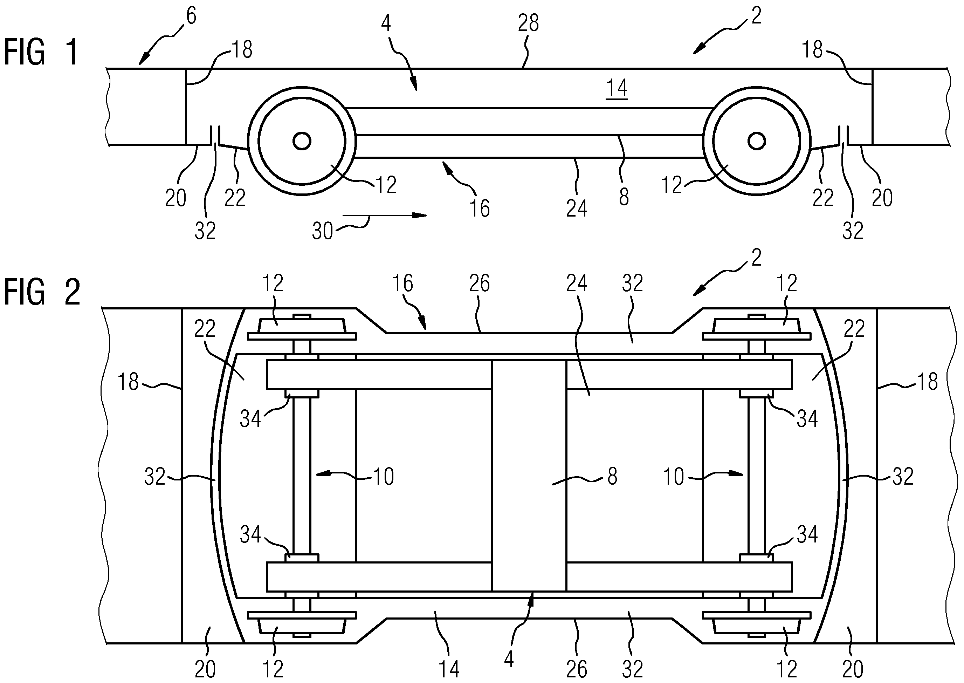

FIG 1 zeigt schematisch einen Teil eines Schienenfahrzeugs 2 in einer Seitenansicht.

In FIG 1 sind ein Drehgestell 4 des Schienenfahrzeugs 2 sowie ein Teil eines Wagenkastens 6 des Schienenfahrzeugs 2 abgebildet. Der Wagenkasten 6 des Schienenfahrzeugs 2 ist mittels einer figürlich nicht dargestellten Drehpfanne des Drehgestells 4 derart auf dem Drehgestell 4 gelagert, dass der Wagenkasten 6 relativ zu dem Drehgestell 4 drehbar ist.

Das Drehgestell 4 umfasst unter anderem einen Drehgestellrahmen 8 und zwei Radsätze 10 (siehe FIG 2). In FIG 1 sind zwei Räder 12 der beiden Radsätze 10 abgebildet. Des Weiteren ist das Drehgestell 4 in eine Drehgestellkavität 14 des Schienenfahrzeugs 2 eingebettet.

Ferner weist das Schienenfahrzeug 2 eine mehrteilige Drehgestellverkleidung 16 auf, mittels welcher das Drehgestell 4 verkleidet ist. Die Drehgestellverkleidung 16 schließt die Drehgestellkavität 14 ab.

Die Drehgestellverkleidung 16 umfasst zwei am Wagenkasten 6 befestigte Schottwände 18 sowie zwei am Wagenkasten 6 befestigte Bodenwände 20. Außerdem umfasst die Drehgestellverkleidung 16 zwei Radsatzverkleidungen 22 sowie eine zwischen den beiden Radsatzverkleidungen 22 angeordnete Mittelverkleidung 24, wobei die beiden Radsatzverkleidungen 22 und die Mittelverkleidung 24 am Drehgestell 4, insbesondere am Drehgestellrahmen 8, befestigt sind. Darüber umfasst die Drehgestellverkleidung 16 zwei in FIG 1 nicht dargestellte, am Wagenkasten 6 befestigte Seitenverkleidungen 26 (siehe FIG 2). Die zuvor genannten Teile 18-26 der Drehgestellverkleidung 16 können jeweils aus einem Element oder mehreren miteinander verbundenen Elementen, insbesondere aus mehreren miteinander verbundenen Platten, bestehen.

Die Drehgestellkavität 14 ist nach oben durch einen Bodenabschnitt 28 des Wagenkastens 6 begrenzt. In Fahrzeuglängsrichtung 30 ist die Drehgestellkavität 14 durch die beiden Schottwände 18 begrenzt.

Zwischen ihrer vorderen Bodenwand 20 und ihrer vorderen Radsatzverkleidung 22 - bezogen auf die Fahrzeuglängsrichtung 30 - weist die Drehgestellverkleidung 16 eine Öffnung 32 auf. Ebenso weist die Drehgestellverkleidung 16 zwischen ihrer hinteren Bodenwand 20 und ihrer hinteren Radsatzverkleidung 22 - bezogen auf die Fahrzeuglängsrichtung 30 - eine Öffnung 32 auf. Bei diesen beiden Öffnungen 32 handelt es sich jeweils um einen Bewegungsspalt, der eine Relativbewegung zwischen der jeweiligen Bodenwand 20 und der jeweiligen Radsatzverkleidung 22 ermöglicht.

FIG 2 zeigt schematisch das Drehgestell 4 sowie die Drehgestellverkleidung 16 des Schienenfahrzeugs 2 aus FIG 1 in einer Ansicht von oben.

In FIG 2 sind beide Radsätze 10 des Drehgestells 4 mit ihren Radsatzlagern 34 und Rädern 12 abgebildet. Zudem sind in FIG 2 die beiden zuvor erwähnten Seitenverkleidungen 26 der Drehgestellverkleidung 16 abgebildet.

Die Drehgestellverkleidung 16 weist ferner zwischen den am Drehgestell 4 befestigten Teilen 22, 24 der Drehgestellverkleidung 16 und der an der linken Fahrzeugseite angeordneten Seitenverkleidung 26 sowie zwischen den am Drehgestell 4 befestigten Teilen 22, 24 der Drehgestellverkleidung 16 und der an der rechten Fahrzeugseite angeordneten Seitenverkleidung 26 jeweils eine Öffnung 32 auf. Auch bei diesen Öffnungen 32 handelt es sich jeweils um einen Bewegungsspalt, der eine Relativbewegung zwischen der jeweiligen Seitenverkleidung 26 und den am Drehgestell 4 befestigten Teilen 22, 24 der Drehgestellverkleidung 16 ermöglicht.

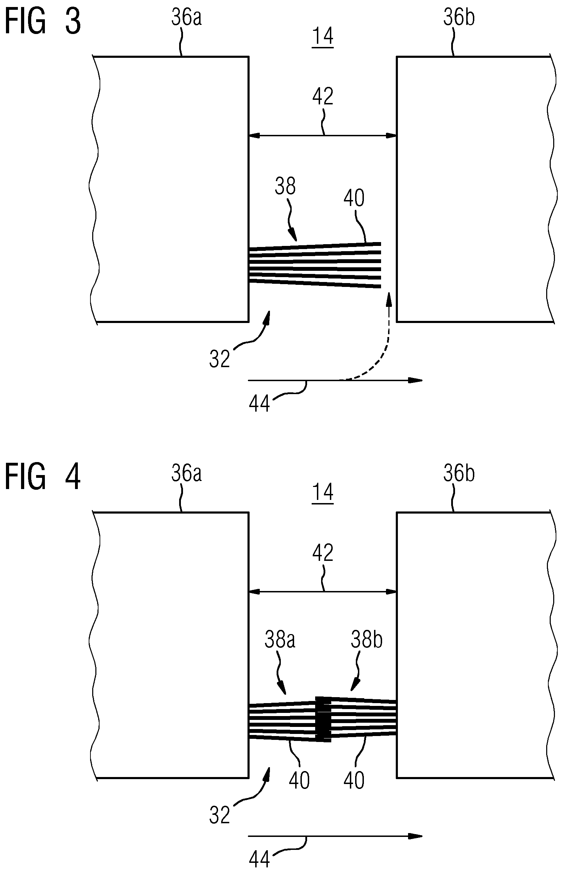

An den bisher erwähnten Öffnungen 32 ist die Drehgestellverkleidung 16 jeweils mit mindestens einem elastisch verformbaren Strömungshemmungsmittel ausgestattet, das dazu dient, ein Einströmen von Außenluft durch die jeweilige Öffnung 32 in die Drehgestellkavität 14 zu verringern (vgl. FIG 3 - FIG 6). In FIG 1 und FIG 2 sind die Strömungshemmungsmittel einer besseren Übersichtlichkeit halber nicht dargestellt.

FIG 3-6 zeigen jeweils schematisch ein erstes Verkleidungselement 36a der Drehgestellverkleidung 16 sowie ein benachbart zu dem ersten Verkleidungselement 36a angeordnetes zweites Verkleidungselement 36b der Drehgestellverkleidung 16.

Zwischen den beiden Verkleidungselementen 36a, 36b weist die Drehgestellverkleidung 16 eine Öffnung 32, insbesondere in Form eines Spalts, auf.

Die beiden Verkleidungselemente 36a, 36b können am Drehgestell 4 befestigt sein. Alternativ können die beiden Verkleidungselemente 36a, 36b am Wagenkasten 6 befestigt sein. Weiterhin alternativ kann das erste Verkleidungselement 36a am Drehgestell 4 befestigt sein, während das zweite Verkleidungselement 36b am Wagenkasten 6 befestigt ist, oder umgekehrt. Zum Beispiel kann das erste Verkleidungselement 36a eine der beiden Bodenwände 20 der Drehgestellverkleidung 16 bzw. ein Element der jeweiligen Bodenwand 20 sein. Das zweite Verkleidungselement 36 kann zum Beispiel eine der beiden Radsatzverkleidungen 22 der Drehgestellverkleidung 16 bzw. ein Element der jeweiligen Radsatzverkleidung 22 sein.

Bei der Ausführungsvariante aus FIG 3 weist die Drehgestellverkleidung 16 ein an der Öffnung 32 angeordnetes Strömungshemmungsmittel 38 auf, das an dem ersten Verkleidungselement 36a befestigt ist. Dieses Strömungshemmungsmittel 38 ist als Bürste ausgebildet, wobei das Strömungshemmungsmittel 38 einen aus einer Vielzahl von Bürstenfasern 40 bestehenden Bürstenbesatz aufweist.

Das Strömungshemmungsmittel 38 erstreckt sich bei der Ausführungsvariante aus FIG 3 nur über einen Teil der Breite 42 der Öffnung 32. Das heißt, das Strömungshemmungsmittel 38 ist von dem zweiten Verkleidungselement 36b beabstandet. Mithilfe des Strömungshemmungsmittels 38 wird erreicht, dass ein geringerer Teil einer Außenluftströmung 44 durch die Öffnung 32 in die Drehgestellkavität 14 hineinströmt (verglichen mit dem Fall, dass an der Öffnung 32 kein solches Strömungshemmungsmittel 38 angeordnet ist).

Bei der Ausführungsvariante aus FIG 4 umfasst die Drehgestellverkleidung 16 ein an der Öffnung 32 angeordnetes erstes Strömungshemmungsmittel 38a, das an dem ersten Verkleidungselement 36a befestigt ist, sowie ein an der Öffnung 32 angeordnetes zweites Strömungshemmungsmittel 38b, das an dem zweiten Verkleidungselement 36b befestigt ist. Das jeweilige Strömungshemmungsmittel 38a, 38b ist als Bürste ausgebildet und weist einen aus einer Vielzahl von Bürstenfasern 40 bestehenden Bürstenbesatz auf.

Die beiden Strömungshemmungsmittel 38a, 38b erstrecken sich bei der Ausführungsvariante aus FIG 4 nur über einen Teil der Breite 42 der Öffnung 32. Das heißt, das erste Strömungshemmungsmittel 38a ist von dem zweiten Verkleidungselement 36b beabstandet und das zweite Strömungshemmungsmittel 38b ist von dem ersten Verkleidungselement 36a beabstandet. Bei der Ausführungsvariante aus FIG 4 berühren sich die beiden Strömungshemmungsmittel 38a, 38b und greifen ineinander.

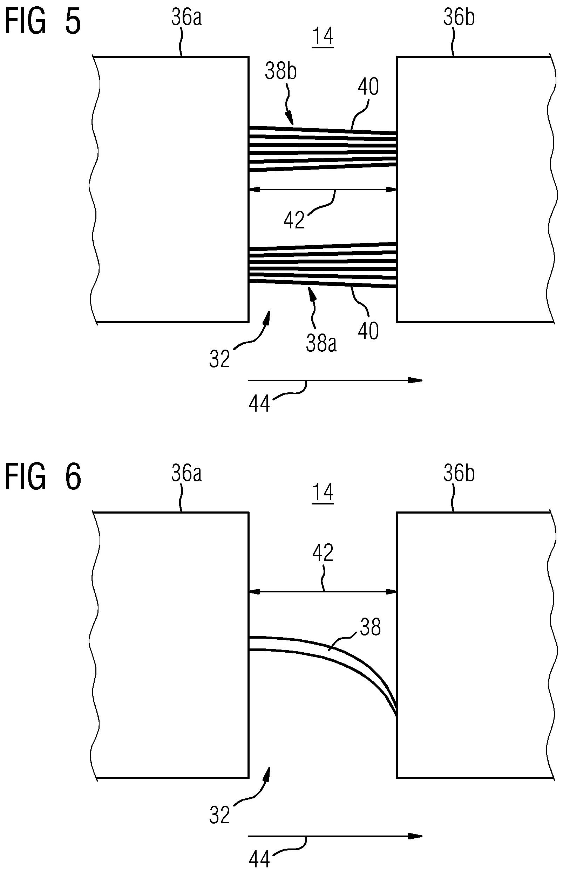

Bei der Ausführungsvariante aus FIG 5 umfasst die Drehgestellverkleidung 16 ein an der Öffnung 32 angeordnetes erstes Strömungshemmungsmittel 38a, das an dem ersten Verkleidungselement 36a befestigt ist, sowie ein an der Öffnung 32 angeordnetes zweites Strömungshemmungsmittel 38b, das an dem zweiten Verkleidungselement 36b befestigt ist. Diese beiden Strömungshemmungsmittel 38a, 38b sind jeweils als Bürste ausgebildet und weisen jeweils einen aus einer Vielzahl von Bürstenfasern 40 bestehenden Bürstenbesatz auf.

Zudem erstrecken sich die beiden Strömungshemmungsmittel 38a, 38b bei der Ausführungsvariante aus FIG 5 über die gesamte Breite 42 der Öffnung 32. Das heißt, das erste Strömungshemmungsmittel 38a ist mit dem zweiten Verkleidungselement 36b in Kontakt und das zweite Strömungshemmungsmittel 38b ist mit dem ersten Verkleidungselement 36a in Kontakt. Bei der Ausführungsvariante aus FIG 5 sind die beiden Strömungshemmungsmittel 38a, 38b voneinander beabstandet.

Bei der FIG 6 weist die Drehgestellverkleidung 16 ein an der Öffnung 32 angeordnetes Strömungshemmungsmittel 38 auf, das an dem ersten Verkleidungselement 36a befestigt ist. Dieses Strömungshemmungsmittel 38 ist als Dichtlippe ausgebildet und ist mit dem zweiten Verkleidungselement 36b in Kontakt. Diese Ausführung ist jedoch kein Teil der beanspruchten Erfindung.

Bei jeder der Ausführungsvarianten aus FIG 3 bis FIG 6 wird durch das jeweilige Strömungshemmungsmittel 38, 38a, 38b ein Einströmen von Luft durch die Öffnung 32 in die Drehgestellkavität 14 gehemmt.

Zumindest eine der beiden Schottwände 18 der Drehgestellverkleidung 16 (vgl. FIG 1 oder FIG 2) kann eine Öffnung aufweisen, durch welche beispielsweise ein Kabel und/oder eine Fluidleitung hindurchgeführt sind/ist. An solcher einer Öffnung kann die Drehgestellverkleidung 16 ebenfalls ein Strömungshemmungsmittel der zuvor beschriebenen Art aufweisen, um ein Einströmen von Luft in die Drehgestellkavität 14 durch diese Öffnung zu verringern.

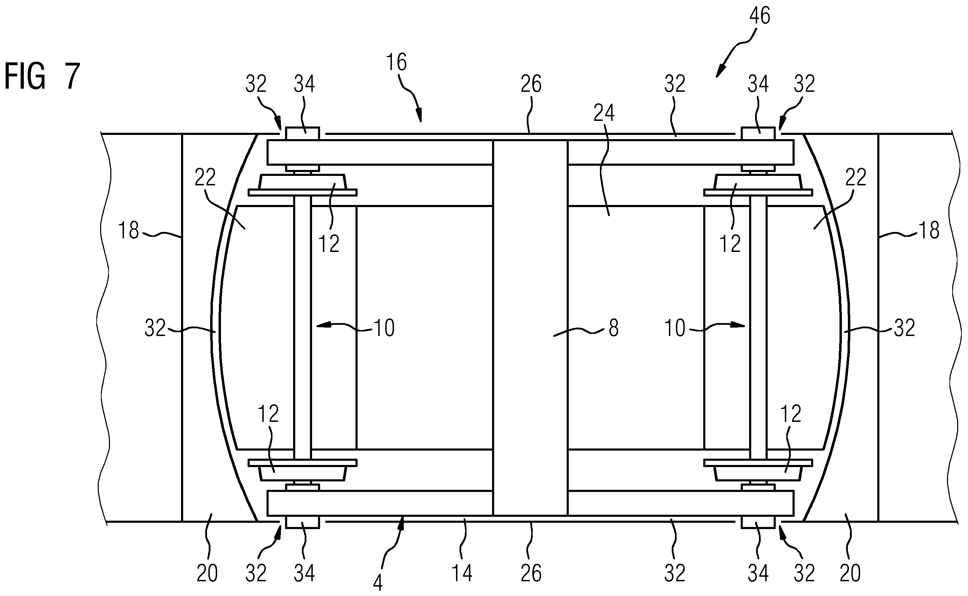

FIG 7 zeigt schematisch ein Drehgestell 4 sowie eine Drehgestellverkleidung 16 eines weiteren Schienenfahrzeugs 46 in einer Ansicht von oben.

Die Beschreibung des nachfolgenden Ausführungsbeispiels beschränkt sich primär auf die Unterschiede zu dem Ausführungsbeispiel aus FIG 1 und FIG 2, auf das bezüglich gleicher Merkmale und Funktionen verwiesen wird.

Bei der Drehgestellverkleidung 16 aus FIG 7 weisen beide Seitenverkleidungen 26 jeweils zwei Öffnungen 32 auf. Durch diese Öffnungen 32 ist jeweils eins der Radsatzlager 34 hindurchgeführt. Mit anderen Worten, aus den Öffnungen 32 ragt jeweils eins der Radsatzlager 34 des Drehgestells 16 heraus.

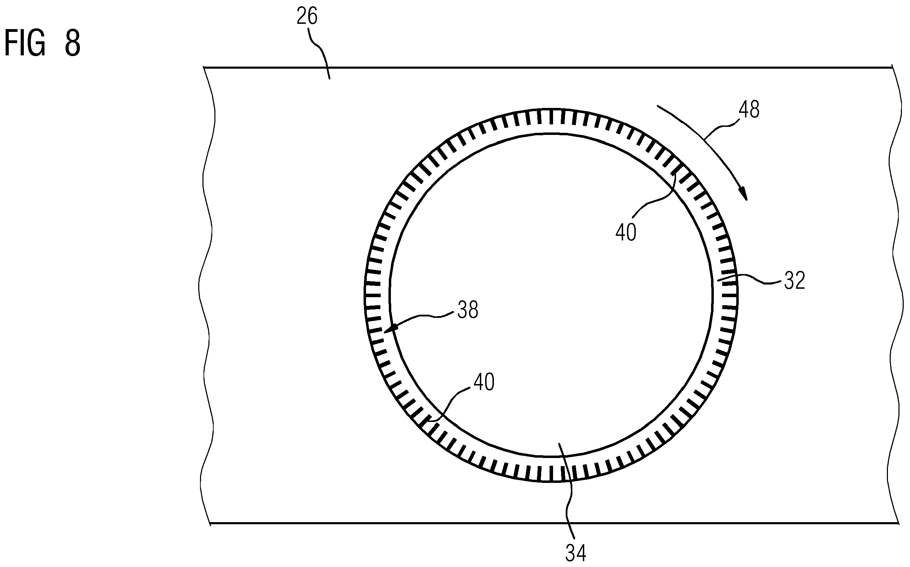

Auch an diesen Öffnungen 32 ist die Drehgestellverkleidung 16 jeweils mit einem elastisch verformbaren Strömungshemmungsmittel ausgestattet, das dazu dient, ein Einströmen von Außenluft durch die jeweilige Öffnung 32 in die Drehgestellkavität 14 zu verringern (vgl. FIG 8).

FIG 8 zeigt exemplarisch einen Abschnitt einer der Seitenverkleidungen 26 der Drehgestellverkleidung 16 aus FIG 7.

In dem dargestellten Abschnitt der Seitenverkleidungen 26 befindet sich eine der Öffnungen 32 der Seitenverkleidung 26, aus welcher eins der Radsatzlager 34 herausragt.

Die Drehgestellverkleidung 16 weist ein an der Öffnung 32 angeordnetes Strömungshemmungsmittel 38 auf, das als Bürste ausgebildet ist und eine Vielzahl von Bürstenfasern 40 umfasst. Dieses Strömungshemmungsmittel 38 umgibt das aus der Öffnung 32 herausragende Radsatzlager 34 in dessen Umfangsrichtung 48.

Im vorliegenden Beispiel sind die Bürstenfasern 40 des Strömungshemmungsmittels 38 von dem Radsatzlager 34 beabstandet. Alternativ können die Bürstenfasern 40 das Radsatzlager 34 berühren.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den durch die Ansprüche definierten Schutzumfang der Erfindung zu verlassen.

## Patentansprüche

1. Schienenfahrzeug (2, 46), umfassend ein Drehgestell (4), eine Drehgestellkavität (14), in welche das Drehgestell (4) eingebettet ist, eine Drehgestellverkleidung (16), mittels welcher das Drehgestell (4) zumindest teilweise verkleidet ist, wobei die Drehgestellverkleidung (16) eine Öffnung (32) aufweist,
wobei die Drehgestellverkleidung (16) ein an der Öffnung (32) angeordnetes Strömungshemmungsmittel (38, 38a, 38b) zur Verringerung eines Einströmens von Luft durch die Öffnung (32) in die Drehgestellkavität (14) aufweist, **dadurch gekennzeichnet, dass**
das Strömungshemmungsmittel (38, 38a, 38b) als Bürste ausgebildet ist.

2. Schienenfahrzeug (2, 46) nach Anspruch 1,
**dadurch gekennzeichnet, dass** das Strömungshemmungsmittel (38, 38a, 38b) elastisch verformbar ist.

3. Schienenfahrzeug (2, 46) nach Anspruch 1 oder 2,
**dadurch gekennzeichnet, dass** die Drehgestellverkleidung (16) ein erstes Verkleidungselement (36a) und ein benachbart zu dem ersten Verkleidungselement (36a) angeordnetes zweites Verkleidungselement (36b) aufweist, wobei besagte Öffnung (32) ein Spalt zwischen dem ersten und dem zweiten Verkleidungselement (36a, 36b) ist.

4. Schienenfahrzeug (2, 46) nach Anspruch 3,
**dadurch gekennzeichnet, dass** das erste und das zweite Verkleidungselement (36a, 36b) am Drehgestell (4) befestigt sind.

5. Schienenfahrzeug (2, 46) nach Anspruch 3,
**gekennzeichnet durch** einen Wagenkasten (6), wobei das erste und das zweite Verkleidungselement (36a, 36b) am Wagenkasten (6) befestigt sind.

6. Schienenfahrzeug (2, 46) nach Anspruch 3,
**gekennzeichnet durch** einen Wagenkasten (6), wobei das erste Verkleidungselement (36a) am Drehgestell (4) befestigt ist und das zweite Verkleidungselement (36b) am Wagenkasten (6) befestigt ist oder das erste Verkleidungselement (36a) am Wagenkasten (6) befestigt ist und das zweite Verkleidungselement (36b) am Drehgestell (4) befestigt ist.

7. Schienenfahrzeug (2, 46) nach einem der Ansprüche 3 bis 6, **gekennzeichnet durch** ein weiteres an der Öffnung (32) angeordnetes Strömungshemmungsmittel (38b) zur Verringerung eines Einströmens von Luft durch die Öffnung (32) in die Drehgestellkavität (14), wobei das erstgenannte Strömungshemmungsmittel (38a) am ersten Verkleidungselement (36a) befestigt ist und das weitere Strömungshemmungsmittel (38b) am zweiten Verkleidungselement (36b) befestigt ist.

8. Schienenfahrzeug (2, 46) nach Anspruch 7,
**dadurch gekennzeichnet, dass** die beiden Strömungshemmungsmittel (38a, 38b) voneinander beabstandet sind.

9. Schienenfahrzeug (2, 46) nach Anspruch 7,
**dadurch gekennzeichnet, dass** die beiden Strömungshemmungsmittel (38a, 38b) miteinander in Kontakt sind und/oder ineinander greifen.

10. Schienenfahrzeug (2, 46) nach einem der Ansprüche 7 bis 9,
**dadurch gekennzeichnet, dass** das erstgenannte Strömungshemmungsmittel (38a) mit dem zweiten Verkleidungselement (36b) in Kontakt ist und/oder das weitere Strömungshemmungsmittel (38b) mit dem ersten Verkleidungselement (36a) in Kontakt ist.

11. Schienenfahrzeug (2, 46) nach Anspruch 1 oder 2,
**dadurch gekennzeichnet, dass** die Öffnung (32) eine Öffnung eines Verkleidungselements (26) der Drehgestellverkleidung (16) ist, durch welche ein Element (34) des Drehgestells (6) hindurchgeführt ist.

## Claims

1. Rail vehicle (2, 46), comprising a bogie (4), a bogie cavity (14) in which the bogie (4) is embedded, a bogie cladding (16) by means of which the bogie (4) is at least partially clad, wherein the bogie cladding (16) has an opening (32),
wherein the bogie cladding (16) has a flow-inhibiting means (38, 38a, 38b) arranged at the opening (32) to reduce an inflow of air through the opening (32) into the bogie cavity (14), **characterised in that** the flow-inhibiting means (38, 38a, 38b) is embodied as a brush.

2. Rail vehicle (2, 46) according to claim 1,
**characterised in that** the flow-inhibiting means (38, 38a, 38b) is elastically deformable.

3. Rail vehicle (2, 46) according to claim 1 or 2,
**characterised in that** the bogie cladding (16) has a first cladding element (36a) and a second cladding element (36b) arranged adjacent to the first cladding element (36a), wherein said opening (32) is a gap between the first and the second cladding element (36a, 36b).

4. Rail vehicle (2, 46) according to claim 3,
**characterised in that** the first and the second cladding element (36a, 36b) are attached to the bogie (4).

5. Rail vehicle (2, 46) according to claim 3,
**characterised by** a body (6), wherein the first and the second cladding element (36a, 36b) are attached to the body (6).

6. Rail vehicle (2, 46) according to claim 3,
**characterised by** a body (6), wherein the first cladding element (36a) is attached to the bogie (4) and the second cladding element (36b) is attached to the body (6) or the first cladding element (36a) is attached to the body (6) and the second cladding element (36b) is attached to the bogie (4).

7. Rail vehicle (2, 46) according to one of claims 3 to 6,
**characterised by** a further flow-inhibiting means (38b) arranged at the opening (32) to reduce an inflow of air through the opening (32) into the bogie cavity (14), wherein the first-mentioned flow-inhibiting means (38a) is attached to the first cladding element (36a) and the further flow-inhibiting means (38b) is attached to the second cladding element (36b).

8. Rail vehicle (2, 46) according to claim 7,
**characterised in that** the two flow-inhibiting means (38a, 38b) are spaced apart from one another.

9. Rail vehicle (2, 46) according to claim 7,
**characterised in that** the two flow-inhibiting means (38a, 38b) are in contact with one another and/or engage in one another.

10. Rail vehicle (2, 46) according to one of claims 7 to 9,
**characterised in that** the first-mentioned flow-inhibiting means (38a) is in contact with the second cladding element (36b) and/or the further flow-inhibiting means (38b) is in contact with the first cladding element (36a).

11. Rail vehicle (2, 46) according to one of claims 1 or 2,
**characterised in that** the opening (32) is an opening of a cladding element (26) of the bogie cladding (16) through which an element (34) of the bogie (6) is guided.

## Revendications

1. Véhicule ferroviaire (2, 46), comprenant un bogie (4), une cavité de bogie (14), dans laquelle le bogie (4) est incorporé, un carénage de bogie (16) au moyen duquel le bogie (4) est caréné au moins partiellement, dans lequel le carénage de bogie (16) présente une ouverture (32), dans lequel le carénage de bogie (16) présente un moyen de perception de flux (38, 38a, 38b) disposé au niveau de l'ouverture (32) et destiné à la réduction d'un flux entrant d'air à travers l'ouverture (32) dans la cavité de bogie (14), **caractérisé en ce que** le moyen de perception de flux (38, 38a, 38b) est réalisé en tant que balai.

2. Véhicule ferroviaire (2, 46) selon la revendication 1, **caractérisé en ce que** le moyen de perception de flux (38, 38a, 38b) est déformable élastiquement.

3. Véhicule ferroviaire (2, 46) selon la revendication 1 ou 2, **caractérisé en ce que** le carénage de bogie (16) présente un premier élément de carénage (36a) et un second élément de carénage (36b) disposé à proximité du premier élément de carénage (36a), dans lequel ladite ouverture (32) est une fente entre le premier et le second élément de carénage (36a, 36b).

4. Véhicule ferroviaire (2, 46) selon la revendication 3, **caractérisé en ce que** le premier et le second élément de carénage (36a, 36b) sont fixés au bogie (4).

5. Véhicule ferroviaire (2, 46) selon la revendication 3, **caractérisé par** un châssis de véhicule (6), dans lequel le premier et le second élément de carénage (36a, 36b) sont fixés au châssis de véhicule (6).

6. Véhicule ferroviaire (2, 46) selon la revendication 3, **caractérisé par** un châssis de véhicule (6), dans lequel le premier élément de carénage (36a) est fixé au bogie (4) et le second élément de carénage (36b) est fixé au châssis de véhicule (6) ou le premier élément de carénage (36a) est fixé au châssis de véhicule (6) et le second élément de carénage (36b) est fixé au bogie (4).

7. Véhicule ferroviaire (2, 46) selon l'une quelconque des revendications 3 à 6, **caractérisé par** un moyen de perception de flux (38b) supplémentaire disposé au niveau de l'ouverture (32) et destiné à la réduction d'un flux entrant d'air à travers l'ouverture (32) dans la cavité de bogie (14), dans lequel ledit premier moyen de perception de flux (38a) est fixé au premier élément de carénage (36a) et l'autre moyen de perception de flux (38b) est fixé au second élément de carénage (36b).

8. Véhicule ferroviaire (2, 46) selon la revendication 7, **caractérisé en ce que** les deux moyens de perception de flux (38a, 38b) sont à distance l'un de l'autre.

9. Véhicule ferroviaire (2, 46) selon la revendication 7, **caractérisé en ce que** les deux moyens de perception de flux (38a, 38b) sont en contact l'un avec l'autre et/ou s'imbriquent l'un dans l'autre.

10. Véhicule ferroviaire (2, 46) selon l'une quelconque des revendications 7 à 9, **caractérisé en ce que** ledit premier moyen de perception de flux (38a) est en contact avec le second élément de carénage (36b) et/ou l'autre moyen de perception de flux (38b) est en contact avec le premier élément de carénage (36a).

11. Véhicule ferroviaire (2, 46) selon la revendication 1 ou 2, **caractérisé en ce que** l'ouverture (32) est une ouverture d'un élément de carénage (26) du carénage de bogie (16), à travers laquelle un élément (34) du bogie (6) passe.
